# EUROPEAN PATENT APPLICATION

(11) **EP 1 279 480 A1**
(43) Date of publication of application: **29.01.2003**
(21) Application number: 02016746.6
(22) Date of filing: 26.07.2002
(51) Int. Cl.: B29C 67/00

(54) **Apparatus for creating three-dimensional objects**

(30) Priority: 27.07.2001 JP 2001262412; 20.05.2002 JP 2002003806 U
(71) Applicant: NEXT FACTORY S.R.L., 36010 Zane'(Vicenza) (IT)
(72) Inventor: Gotoh, Hikaru c/o Autostrade Co Ltd, Oita-shi, Oita-ken (JP); Yano, Yasuharu c/o Autostrade Co Ltd, Oita-shi, Oita-ken (JP); Akamine, Toshiyuki, Oita-shi, Oita-ken (JP)
(74) Representative: Forattini, Amelia

(57) **Abstract**

An apparatus for creating three-dimensional objects characterized in that it comprises a motion device (1, 2, 11), adapted to move along three orthogonal axes (X,Y,Z) within a working space where a three-dimensional object (10) is formed, and a nozzle member (8, 9) adapted to dispense a foamed material, provided by mixing a liquid material and a gas, said foamed material being dispensed by said nozzle member continuously in order to obtain a lighter and stronger object with less material.

## Description

The present invention relates to an apparatus for creating three-dimensional objects.

More particularly, the present invention relates to an improved apparatus for creating three-dimensional objects by solidifying a liquid material which is sprayed, hardened and made to adhere, continuously.

It is known from the prior art a method for creating three-dimensional objects by liquefying and hot spraying a resin, as known from Japanese Patent Application Tokukaihei 9-24552.

It is known to form a three-dimensional object of predetermined design, such as a model or article, by depositing multiple layers of a material in a fluid state onto a base. The material is selected and its temperature is controlled so that it solidifies substantially instantaneously upon extrusion or dispensing onto a base, with the build-up of the multiple layers forming the desired article.

Such prior art systems require a large amount of material and time for forming the desired article because the minimum unit of liquefaction, adapted to obtain the article by liquefying and feeding the material continuously, has a diameter from about 0.1 to about 3 mm.

A typical prior art apparatus creates the desired article by liquefying the thermoplastic resin, through heating, and by spraying it with a nozzle that operates three-dimensionally. An important drawback of such type of apparatus is that the size of the objects that can be fabricated is limited because while attempting to create a large object, the article tends to warp or collapse under its own weight.

An aim of the present invention is to overcome the problems and inconveniences of the prior art.

The above aims and other aims that will be more apparent hereinafter, are achieved by an apparatus as claimed in the appended claims.

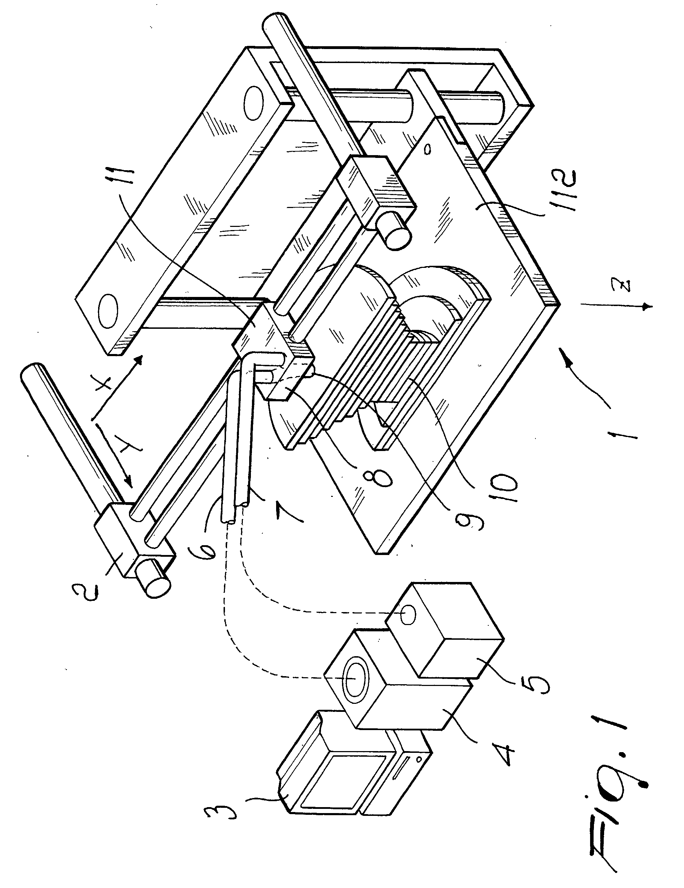

Further characteristics and advantages of the invention will be more apparent by the following description of an embodiment of the invention, illustrated, by way of example in the enclosed drawings wherein
FIG. 1 is a schematic perspective view of the apparatus according to the invention;

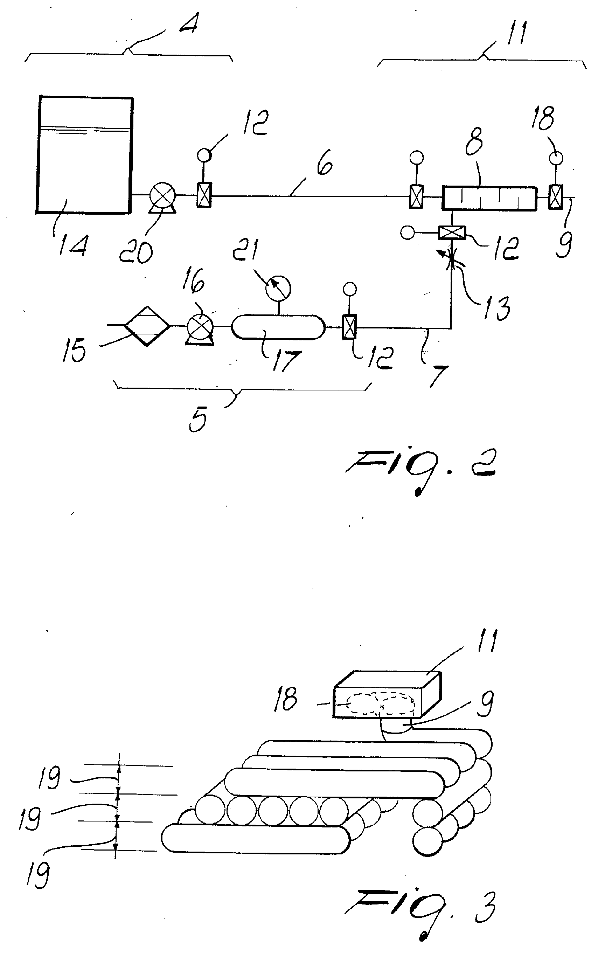

FIG. 2 is a diagram showing the operating components of the apparatus according to the invention;
FIG. 3 is a perspective view showing the process according to the invention;
FIG. 4 is a perspective view of a base having a web structure;
FIG. 5 is a perspective view of a base having a corrugated structure;
FIG. 6 is a perspective view of a base having a removable film.

With reference to the above drawings, the apparatus for creating three-dimensional objects, according to the present invention, comprises a nozzle head 11 mounted on an arm 2 which can move along two axis, X and Y, and is controlled by a computer 3.

A working base 1, which can move along a vertical axis Z, is located under the nozzle head 11.

At the beginning of the operation, the working base 1 is located in a superior position and, during the fabrication of the object 10, the base 1 moves downwards while the nozzle head dispenses material on the base 1, layer by layer.

The shape of the object is determined by the X-Y motion of the nozzle head 11 which reproduces the drawing stored in the computer while the base 1 moves downwards.

A material feed tube 6 and a gas feed tube 7 are connected to the nozzle head 11 and move together with the nozzle head along the X and Y axes. The nozzle head 11, the material feed tube 6 and gas feed tube 7 are preferably protected by a protective casing, not visible in the drawings.

The nozzle head 11 comprises a mixer member 8, wherein the pressurized material and the pressurized gas are mixed, and a nozzle member 9 having a on-off valve 18 adapted to regulate the emission of foamed material produced in the mixer member 8.

The apparatus comprises a material dispenser 4 and a gas dispenser 5. The material dispenser 4 comprises a tank 14, containing the material, a feed pump 20 and a control valve 12. The gas dispenser 5 comprises a filter 15, a pressurized tank 17, a compressor pump 16, a pressure gauge 21 and the control valve 12

The gas dispenser 5 is adapted to produce both foaming and non foaming materials in a foamed state.

When using a liquid thermoplastic material, such a foamed polyurethane, there may be cases when the gas dispenser 5 is not used, in fact, as illustrated in the present embodiment, the foam material is obtained by mixing the material and the gas in the nozzle head 11. The most appropriate portion of the apparatus, either the gas dispenser 5 or the nozzle head 11, will be used to produce a foamed material, according to the foaming characteristics of the base material.

The computer unit controlling the X-Y axes arm 2 and the Z axis base 1, computes all the pertinent data, such as the motion, speed, and step between one sweep and the next, analyzing the coordinates of the three-dimensional shape of the model, making the head 11 draw the desired shape.

The computer unit contains the various CAD functions required for designing the shape of the model, controlling the data imported by a scanner, etc.

The operation of the apparatus according to the invention is as follows.

The material is stored in the material tank 14 and is pressure fed, by means of the feed pump 20, through the feed tube, to the nozzle head 11.

The control valve 12 is conveniently mounted at the outlet of the pressure pump 20 in order to facilitate its maintenance.

The material is fed to the material feed tube 6 and reaches the mixer portion 8, through the control valve 12 which is located at the inlet of the nozzle head.

The gas, dispensed by the gas dispenser 5, reaches the mixer member 8 through the valve 13, which controls the pressure and the feed rate, and through the on-off valve 12. The gas is thus mixed into the material foaming it and the foamed material is distributed by the nozzle 9 on the base 1 or on the object 10 being formed. The nozzle comprises a valve controlling the emission of material according to the desired shape.

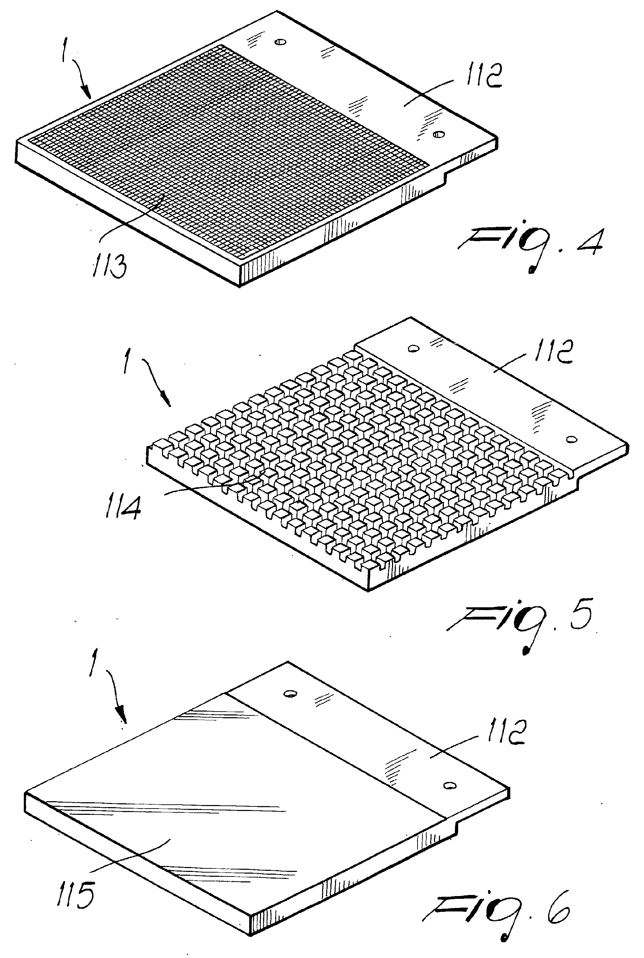

The computer unit 3 computes the shape of each layer according to a vertical analysis of the three-dimensional model and controls the emission of foamed material from the nozzle head 11, operated by the arm 2, thus creating the first layer according to the computed data. The first layer will have a selected thickness 19, as schematically illustrated in FIG. 3.

After the first layer is formed, the base 1 is lowered, by a distance corresponding to the layer thickness 19, and a second layer is deposited on the first one, and so on until the complete object 10 is formed layer by layer.

According to a further aspect of the invention, the base 1 is constituted by a removable base plate 112 which is fastened to a support by screws, clips, or other fasteners.

The base plate 112 may be of two types: a web plate 113 or a grooved plate 114. The choice of the base plate depends on the exigency of removing the formed object from the base plate.

With a material that solidifies on contact with air, such as, for example, foamed urethane, the web base plate 113 is preferable because the object enters into contact with the air through the web structure from all directions.

Even with a material that solidifies on contact with air, it may happen that the percentage of gas present into the material, the time required for solidifying, and its viscosity, may cause a non perfect adhesion of the object to the base plate. In such case, the grooved base plate 114 may be preferably used for exposing the material to more air.

The distance between one groove and the other should be sufficiently small to prevent the material from entering the grooves. A greater number of grooves is preferable and the grooves may be parallel or crossed.

A either permeable or hermetic removable film 115 may be applied to the base plate 112 for facilitating the removal of the object from the base plate, by allowing air and humidity over the base plate.

The removable film may be attached to the base plate by means of clips, glue, screws, etc.

When the object is completed, the base plate 112 is removed from the apparatus and, after removing the object, the base plate 112 may be used again for forming a new object.

If, for any reason, the base plate cannot be removed from the support, the use of a web or grooved base plate will in any case allow the removal of the object from the base.

According to the present invention, the fluid foamed material is provided continuously by mixing it with a preferred percentage of gas. It is thus possible to obtain fast solidifying rates with respect to conventional systems thus reducing the time required for fabricating the model and the quantity of material used.

A further advantage of the invention is that the model contains many gas bubbles and when it has to be disposed the quantity of material to be disposed, after fusing the model by heat or solvent, is reduced.

Furthermore, the internal bubbles make the model quite less heavy than its size would suggest and at the same time mechanically resistant.

The apparatus according to the invention may have numerous modifications and variations, within the scope of the appended claims. All the details may be substituted with technically equivalent elements and the materials employed, as well as the dimensions, may be any according to the specific needs and the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. An apparatus for creating three-dimensional objects **characterized in that** it comprises a motion device (1, 2, 11), adapted to move along three orthogonal axes (X,Y,Z) within a working space where a three-dimensional object (10) is formed, and a nozzle member (8, 9) adapted to dispense a foamed material, provided by mixing a liquid material and a gas, said foamed material being dispensed by said nozzle member continuously.

2. Apparatus, according to claim 1, **characterized in that** it comprises a mixing portion (4, 5, 8, 12) adapted to mix said liquid material with said gas, said mixing portion being upstream of said nozzle member (8, 9).

3. Apparatus, according to claim 1 or 2, **characterized in that** it comprises a dispenser valve adapted to dispense said foamed material, and provided with an on-off valve (18) whose operation is in correlation with the motion device operation.

4. Apparatus, according to one or more of the preceding claims, **characterized in that** it comprises mixer means (8, 13) upstream from said nozzle member (9) wherein said liquid material is mixed with said gas; said mixer means comprising a control valve (13), which controls the pressure and the feed rate, and is located along the gas feed line.

5. Apparatus, according to one or more of the preceding claims, **characterized in that** it comprises a removable base plate (112) for supporting the object.

6. Apparatus, according to one or more of the preceding claims, **characterized in that** base plate has a web structure (113).

7. Apparatus, according to one or more of the preceding claims, **characterized in that** base plate has a grooved structure (114).

8. Apparatus, according to one or more of the preceding claims, **characterized in that** base plate has a removable film (115).

9. Apparatus, according to one or more of the preceding claims, **characterized in that** said removable film (115) is permeable to air and humidity.

10. Apparatus, according to one or more of the preceding claims, **characterized in that** it comprises one or more of the described and/or illustrated characteristics.
